# EUROPÄISCHE PATENTSCHRIFT

(11) **EP 2 571 949 B1**
(45) Veröffentlichungstag und Bekanntmachung des Hinweises auf die Patenterteilung: **04.03.2015**
(21) Anmeldenummer: 11718728.6
(22) Anmeldetag: 06.05.2011
(51) Int. Cl.: C09J 7/04

(54) **SPLICEKLEBEBAND UMFASSEND ZWEI SPALTFÄHIGE VERBINDUNGSELEMENTE**
SPLICING ADHESIVE TAPE COMPRISING SPLITTABLE CONNECTOR ELEMENTS
BANDE ADHÉSIVE DE COLLURE COMPRENANT DEUX ÉLÉMENTS DE LIAISON FENDABLES

(30) Priorität: 20.05.2010 DE 102010029181
(43) Veröffentlichungstag der Anmeldung: 27.03.2013
(73) Patentinhaber: Tesa SE, 20253 Hamburg (DE)
(72) Erfinder: NAGEL, Christoph, 28270 Charlotte (US); GÖTZ, Kerstin, 22547 Hamburg (DE)
(86) Internationale Anmeldenummer: PCT/EP2011/057298
(87) Internationale Veröffentlichungsnummer: WO 2011/144466

(56) Entgegenhaltungen:
- EP-A2- 2 130 886
- WO-A1-03/008311

## Beschreibung

Die vorliegende Erfindung betrifft Spliceklebebänder für den fliegenden Rollenwechsel umfassend einen ersten Träger und ein erstes spaltfähiges Verbindungselement mit einer linken Begrenzungskante (*l*) und einer rechten Begrenzungskante (*r*), wobei zumindest eine dieser beiden Kanten (*l*, *r*) ungerade ist und Vorsprünge (V) aufweist, die an ihren am weitesten vorspringenden Stellen (v) gerundet ausgeführt sind, sowie ein zweites spaltfähiges Verbindungselement mit einer linken Begrenzungskante (*L*) und einer rechten Begrenzungskante (*R*), wobei zumindest eine dieser beiden Kanten (*L, R*) gerade ist, wobei das erste und das zweite spaltfähige Verbindungselement auf dem Träger nebeneinander angeordnet sind. Ferner betrifft die vorliegende Erfindung gewickelte Rollen bahnförmiger Materialien, die mit dem erfindungsgemäßen Spliceklebeband ausgerüstet sind, sowie die Verwendung erfindungsgemäßer Spliceklebebänder in Spliceverfahren.

### Hintergrund der Erfindung

Flache, bahnförmige Materialien, insbesondere Papier, werden zu Ballen gewickelt. Solche Ballen werden zum Beispiel papierverarbeitenden Maschinen oder Druck- bzw. Verpackungsmaschinen zugeführt. Beim Dauerbetrieb solcher Anlagen ist es notwendig, an das Ende eines ersten Ballens des flachen, bahnförmigen Materials im fliegenden Wechsel den Beginn eines neuen aufgewickelten Ballens anzusetzen und in geeigneter Weise zu verbinden, ohne beim Wechsel der Rollen die schnelllaufenden Maschinen anhalten zu müssen. Dieser Vorgang wird als Spleißen (engl. "splice") bezeichnet.

Hierfür werden in der Papierindustrie doppelseitig klebende Selbstklebebänder eingesetzt, die im Wesentlichen aus einer Trägerschicht und zwei Selbstklebemasseschichten bestehen, um eine Verbindung zwischen dem Ende der alten Materialbahn und dem Anfang der neuen Materialbahn herzustellen. Das Ende der alten Materialbahn wird dabei mit dem Anfang der neuen Materialbahn verklebt.

Um beim Verbinden von alter und neuer Bahn ein möglichst impulsarmes Spleißen des radial äußeren Endes der neuen Rolle (sozusagen ihres Anfanges) an etwa das Ende der zur Neige gehenden Rolle zu bewirken, muss in an sich bekannter Weise die neue Rolle auf eine solche Drehgeschwindigkeit beschleunigt werden, dass ihre Umfangsgeschwindigkeit der der Bahngeschwindigkeit der alten Bahn entspricht. Während dieses Hochbeschleunigens wird das radial äußere Ende durch Fliehkräfte belastet, während der Wind gleichzeitig unter das Bahnende greift. Damit die Papierrolle diesen Kräften widersteht und nicht "explodiert", muss das verwendete Klebeband bis zum erfolgten Spleiß eine erhebliche Verschlussfestigkeit gewährleisten. Nachdem der erwünschte fliegende Spleiß zustande gekommen ist, ist allerdings eine möglichst geringe Verschlussfestigkeit erwünscht.

Zur Lösung dieses Problems schlägt die DE 10 2005 051 181 A1 ein Spliceklebeband umfassend ein spaltfähiges Klebeband mit einer linken (*l* und einer rechten Begrenzungskante (*r*) vor, wobei zumindest eine dieser beiden Kanten (*l*, *r*) ungerade ist und die ungerade Kante (/) Vorsprünge (V) aufweist, die an ihren am weitesten vorspringenden Stellen (v) gerundet ausgeführt sind. Während ungerade Geometrien des spaltbaren Systems eine ausgeglichene Balance zwischen hoher Verschlussfestigkeit in Bezug auf die wirkenden Fliehkräfte und leichtem Öffnen nach dem Splicevorgang gewährleisten, sind mit solchen Klebebändern Probleme verbunden, die insbesondere beim Vorbereiten gewickelter Rollen bahnförmiger Materialien zum Spleißen auftreten. So kommt es beim Abrollen des Klebebandes im Falle nicht-gerader Geometrien des spaltbaren Systems zu Spannungen an den quer zur Abwickelrichtung stehenden Anlaufkanten des spaltenden Systems und in einigen Fällen zum Anspalten des Spaltstreifens. Das frühzeitige Anspalten tritt vor allem bei Wellenformen beziehungsweise bei solchen Geometrien auf, die sich durch einen hohe Steigung der Geometrie auszeichnen. Zur Lösung dieses Problems schlägt die DE 10 2008 059 385 A1 ein Trennsystem mit charakteristischen Kurvenabschnitten vor.

Allen nicht-geraden, wie zum Beispiel wellenförmigen Geometrien des spaltbaren Systems ist jedoch ein weiteres Problem gemein. So gehört zum Vorbereiten einer neuen Rolle eines gewickelten bahnförmigen Materials nicht nur das Aufbringen entsprechender Spliceklebebänder auf den Ballen, sondern auch das Entfernen verwendeter Trennmedien ("Liner") vor dem eigentlichen Spliceprozess. Die beim Abziehen des Liners auftretenden Kräfte wirken in der Regel radial, sind in der Praxis allerdings regelmäßig in eine, den während des Beschleunigens auftretenden Fliehkräften entgegengesetzte Richtung gerichtet. Durch die während des Abziehens des Linermaterials wirkenden Kräfte kommt es also zu Spannungen am spaltbaren System und somit in einigen Fällen zum Anspalten des Spaltstreifens. Stellt das spaltende System ein zusammenhängendes Flächengebilde dar, kann das unerwünschte Anspalten über eine längere Strecke des spaltbaren Systems laufen., so dass die gewickelte Rolle des bahnförmigen Materials nicht mehr für einen reibungslosen Spliceprozess eingesetzt werden kann.

Ein weiteres Problem, das mit den beschriebenen wellenförmigen Geometrien verbunden ist, besteht in einer erhöhten Neigung entsprechender Spliceklebebänder, im Bereich der spaltfähigen Elemente Falten zu bilden. Zusätzlich zu einer Faltenbildung des Spliceklebebandes selbst kann es ebenso zu einer Faltenbildung des zu Rollen gewickelten bahnförmigen Materials kommen. In beiden Fällen wird ein ungewolltes Anspalten der Spliceklebebänder während der Beschleunigungsphase aufgrund der wirkenden Fliehkräfte begünstigt. Für den Fall, dass das Spliceklebeband auf eine gewickelte Rolle bahnförmigen Materials nicht parallel zur Achse der Rolle, d.h. parallel zum Rollenkern verklebt wird, sondern ungerade, zum Beispiel schief, öffnet nach dem Verbinden der neuen mit der alten Bahn das spaltfähige Verbindungselement mit wellenförmiger Geometrie zunächst nur in einem Teilbereich. Aufgrund seiner wellenförmigen Geometrie und der damit erhöhten Neigung zum unkontrollierten Durchspalten entsprechender Verbindungselemente kann es im Bereich der vorderen Kante des Spliceklebebandes zu einem Umschlagen beziehungsweise Anheben der Bahn kommen, so dass im Übergangsbereich von alter zu neuer Bahn Falten entstehen. Diese Falten führen zu erhabenen Bereichen, d.h. zu Bereichen mit besonderer Dicke. Solche Fehlstellen führen zu Problemen in den folgenden Prozessabläufen und können Zeit- und somit Kosten-verursachende Unterbrechungen der Prozessabläufe hervorrufen. Die erhöhte Neigung der Spliceklebebänder mit Verbindungselementen mit wellenförmiger Geometrie, Falten zu bilden, tritt insbesondere auch bei Ballen, zum Beispiel aus papierförmigem Material zutage, die für einen Spliceprozess vorbereitet wurden, und die während ihrer Lagerung Luftfeuchtigkeit ausgesetzt sind. Zum Beispiel dann, wenn es sich bei dem bahnförmigen Material um Papier handelt, nimmt dieses Papier in gewissem Maße Luftfeuchtigkeit auf, so dass es zu Falten beziehungsweise Spannungen im Übergangsbereich von bahnförmigem Material zu Spliceklebeband kommt. Diese Spannungen übertragen sich auf die spaltfähigen Elemente des Spliceklebebandes. Im Falle einer wellenförmigen Geometrie kann es zu einem vollständigen Öffnen des spaltfähigen Elementes kommen.

Mit anderen Worten bedingt ein nicht-gerades Kanten-Design spaltfähiger Klebebänder innerhalb entsprechender Spliceklebebänder wie in der DE 10 2005 051 181 A1 beschrieben nicht nur Vorteile, sondern geht auch mit Nachteilen einher. Diese Nachteile treten insbesondere dann zu Tage, wenn das spaltfähige Klebeband hinsichtlich seiner Anspaltkraft, d.h. hinsichtlich der zur Überwindung der Spaltfestigkeit an der vorderen Kante benötigte maximale Kraft zum Anspalten des spaltfähigen Systems, "schwach" eingestellt ist. Dies ist zum Beispiel bei sehr dünnen Papieren der Fall, die leicht reißen. In solchen Fällen bewirkt eine wellenförmige Ausgestaltung des spaltfähigen Klebebandes einerseits ein vermehrtes Anspalten des Spliceklebebandes während der Liner zur Vorbereitung des Splice-Prozesses abgezogen wird und andererseits eine ungewollte Faltenbildung des Klebebandes beziehungsweise des bahnförmigen Materials.

Zur Lösung der genannten Probleme schlägt die vorliegende Erfindung ein Spliceklebeband gemäß Hauptanspruch vor.

### Erfindung

So betrifft die vorliegende Erfindung in einem ersten Aspekt Spliceklebebänder umfassend einen ersten Träger und ein erstes spaltfähiges Verbindungselement mit einer linken (*l*) und einer rechten Begrenzungskante (*r*), wobei zumindest eine dieser beiden Kanten (*l*, *r*) ungerade ist und Vorsprünge (V) aufweist, die an ihren am weitesten vorspringenden Stellen (v) gerundet ausgeführt sind, sowie ein zweites spaltfähiges Verbindungselement mit einer linken (*L*) und einer rechten Begrenzungskante (*R*), wobei zumindest eine dieser beiden Kanten (*L, R*) gerade ist, wobei das erste und das zweite spaltfähige Verbindungselement auf dem Träger nebeneinander angeordnet sind.

Der erste Träger des Spliceklebebandes weist auf seiner den Verbindungselementen abgewandten Seite eine Haftklebemasse auf. Entsprechend weist in einer bevorzugten Ausführungsform der Erfindung das erste und/oder das zweite spaltfähige Verbindungselement jeweils eine Haftklebmasse auf ihrer dem ersten Träger abgewandten Seite auf.

In einer bevorzugten Ausführungsform der Erfindung sind das erste und das zweite spaltfähige Verbindungselement auf dem ersten Träger so nebeneinander angeordnet, dass sie selbst nicht miteinander in unmittelbarem Kontakt stehen. Werden das erste und das zweite spaltfähige Verbindungselement auf dem Träger räumlich voneinander getrennt, kann trotz eines nicht vollflächigen Spaltsystems in Form zweier spaltfähiger Verbindungselemente ein Spliceklebeband bereit gestellt werden, das eine erhöhte Anspaltkraft aufweist, so dass höhere Geschwindigkeiten beim Splicen möglich sind, weil das höher spaltende System größeren Fliehkräften und aerodynamischen Kräften widerstehen kann. Ferner bedingt eine solche Ausführungsform den Effekt, dass sie breitenunabhängig ist, da die benötigte Arbeit zum Aufspalten des Spliceklebebandes ("Spaltarbeit", d.h. das Produkt der Kraft mal der Breite des Spaltsystems) durch die Breite der spaltfähigen Verbindungselemente und nicht durch die Breite des Spliceklebebandes selbst definiert wird.

Überraschenderweise wurde gefunden, dass erfindungsgemäße Spliceklebebänder beim Aufbringen auf gewickelte Rollen bahnförmigen Materials zur Vorbereitung eines fliegenden Rollenwechsels eine Faltenbildung im Bereich der Klebebänder vermeiden und gleichzeitig einer Faltenbildung des gewickelten bahnförmigen Materials vorbeugen.

In einer besonders bevorzugten Ausführungsform der Erfindung sind das erste und das zweite spaltfähige Verbindungselement derart auf dem ersten Träger nebeneinander angeordnet, dass eine ungerade Begrenzungskante (*l*, *r*) des ersten spaltfähigen Verbindungselementes und eine gerade Begrenzungskante (*L*, *R*) des zweiten spaltfähigen Verbindungselementes voneinander abgewandt sind, so dass - mit anderen Worten - eine ungerade Begrenzungskante (*l*, *r*) und eine gerade Begrenzungskante (*L*, *R*) jeweils "außen liegen" oder - anders ausgedrückt - die in Anwendungsrichtung des Spliceklebebandes vordere Begrenzungskante des ersten spaltfähigen Verbindungselementes ungerade und die in Anwendungsrichtung hintere Kante des zweiten beziehungweise hinteren Verbindungselementes gerade ausgestaltet sind. Diese besonders bevorzugte Ausführungsform der Erfindung bedingt den Effekt, dass die spaltfähigen Verbindungselemente des Spliceklebebandes beim Abziehen des Liners zur Vorbereitung des Splicevorganges besonders zuverlässig unversehrt bleiben, d.h. dass die Gefahr des ungewollten Anspaltens besonders stark reduziert ist.

Die spaltfähigen Verbindungselemente des erfindungsgemäßen Spliceklebebandes sind derart auf dem ersten Träger angeordnet, dass sie selbst nicht miteinander in unmittelbarem Kontakt stehen. Das bedeutet, dass die Verbindungselemente in einem bestimmten Abstand zueinander angeordnet sind. Der Abstand der Verbindungselemente ergibt sich aus der Breite des Spliceklebebandes und der Breite der einzelnen Verbindungselemente. In einer Ausführungsform sind die Verbindungselemente soweit wie möglich voneinander entfernt angeordnet. Dies bedingt den Effekt, dass das Zeitintervall zwischen dem Spalten der einzelnen Verbindungselemente beim fliegenden Rollenwechsel so groß wie möglich ist. Hierdurch wird gewährleistet, dass neue und alte Bahn eine besonders stabile Verbindung mittels des Spliceklebebandes eingehen können. Ferner bedingt ein möglichst großer Abstand zwischen den spaltfähigen Verbindingselementen eine vereinfachte Handhabung in der Anwendung erfindungsgemäßer Spliceklebebänder, da die Spliceklebebänder in gewickeltem Zustand dann eine erhöhte Stabilität aufweisen. Bevorzugt handelt es sich bei den nebeneinander angeordneten Verbindungselementen um Verbindungselemente, die zueinander in einem Abstand von 3 mm bis 50 mm angeordnet sind. Hierbei ist der genannte Abstand abhängig von der jeweiligen Breite des Spliceklebebandes, der bevorzugt 38 mm -100 mm beträgt

In einer bevorzugten Ausführungsform bedecken die spaltfähigen Verbindungselemente weniger als 80 % der Oberfläche des ersten Trägers des Spliceklebebandes, bevorzugt weniger als 70 %, noch bevorzugter weniger als 60 %. Die Oberflächenabdeckung korreliert dabei mit der zum Aufspalten des Spliceklebebandes benötigten Spaltbarkeit.

In einer Ausführungsform der Erfindung beträgt die zum Aufspalten des in Anwendungsrichtung vorderen, d.h. ersten spaltfähigen Verbindungselementes des Spliceklebebandes benötigte Anspaltkraft, wenn die entstehenden Spalthälften unter einem Winkel von 90 ° zur Flächenebene des Verbindungselementes, d.h. in einem Winkel von 90 ° zur Anwendungsrichtung des Spliceklebebandes mit einer Geschwindigkeit von 300 mm/min getrennt werden, 75 cN pro Zentimeter Breite des Prüfmusters, d.h. Spliceklebebandabschnittes, bevorzugt 70 cN, weiter bevorzugt 65 cN, und die zum Aufspalten des in Anwendungsrichtung vorderen Verbindungselemente benötigte Arbeit maximal 50 Nmm (gemessen bei 23°C und 50%rLf unter Verwendung eines Zwick Roell Z2.5 Messinstrumentes, wobei für die Messung ein 5 cm breiter Streifen eines Spliceklebebandes, dessen zwei Verbindungselemente eine Breite von jeweils 10 mm aufweisen, quer zur Messrichtung auf dem T-Block des Messinstrumentes verklebt und die obere auf dem ersten Träger angeordnete, Klebmasseschicht mit handelsüblichem 80 g/m² Kopierpapier bedeckt wurde, welches zur Messung in die Klemmbacke eingespannt wurde). Die zum Aufspalten des in Anwendungsrichtung hinteren, d.h. zweiten spaltfähigen Verbindungselementes benötigte Anspaltkraft und Spaltarbeit können höher liegen als die in Bezug auf das vordere Verbindungselement genannten Werte. Die für die benötigten Anspaltkräfte genannten Werte werden in Abhängigkeit von der Stärke des zu verbindenden Materials und in Abhängigkeit von der Bahngeschwindigkeit während des Spliceprozesses ausgewählt beziehungsweise eingestellt.

In einer weiteren bevorzugten Ausführungsform der Erfindung liegt das erste, in Anwendungsrichtung vordere spaltfähige Verbindungselement erfindungsgemäßer Spliceklebebänder in Form einer Vielzahl einzelner Flächenelemente vor, während das zweite, in Anwendungsrichtung hintere spaltfähige Verbindungselement in Form eines einzigen, d.h. durchgängigen Flächenelementes vorliegt. Dies bedingt den Effekt, dass im Falle eines ungewollten Anspaltens des ersten Verbindungselementes ein "Durchspalten" über eine längere Strecke des Verbindungselementes vermieden werden kann.

Gemäß einer weiteren Ausführungsform der vorliegenden Erfindung sind die ungeraden Begrenzungskanten des ersten und gegebenenfalls des zweiten spaltfähigen Verbindungselementes jeweils in Form einer sich entlang einer geraden Basislinie (X) erstreckenden Kurve (F) ("rechte Kurve") ausgebildet, die durch eine Abfolge von ansteigenden (s) und abfallenden (f) Kurvenabschnitten charakterisiert ist, so dass zwischen einem jeweiligen ansteigenden Kurvenabschnitt (s) und einem in einer Vorzugsrichtung darauf folgenden abfallenden Kurvenabschnitt (f) im für den durch diese beiden Kurvenabschnitte gebildeten Kurvenbereich ein am weitesten rechts liegender Punkt (Emax) ("Maximum") oder eine Mehrzahl direkt benachbarter am weitesten rechts liegender Punkte (Bmax) ("Maximumsbereich") gebildet wird, und so dass zwischen einem jeweiligen abfallenden Kurvenabschnitt (f) und einem in der Vorzugsrichtung darauf folgenden ansteigenden Kurvenabschnitt (s) im für den durch diese beiden Kurvenabschnitte gebildeten Kurvenbereich ein am weitesten links liegender Punkt (Emin) ("Minimum") oder eine Mehrzahl direkt benachbarter am weitesten links liegender Punkte (Bmin) ("Minimumsbereich") gebildet wird, wobei für die Mehrzahl der durch einen jeweiligen ansteigenden Kurvenabschnitt (s), ein jeweils darauf folgendes Maximum (Emax) bzw. einen jeweils in der Vorzugsrichtung darauf folgenden Maximumsbereich (Bmax) und einen jeweils in der Vorzugsrichtung darauf wieder folgenden abfallenden Kurvenabschnitt (f) gebildeten Kurvenbereiche (R) ("rechts vorspringender Kurvenbereich") gilt, dass die Steilheit im ansteigenden Kurvenabschnitt (s) geringer ist als die Steilheit im in der Vorzugsrichtung darauf folgenden abfallenden Kurvenabschnitt (f), wobei die Steilheit (im Sinne dieser Schrift) eines Kurvenabschnitts den Betrag der Steigung einer Geraden ("Steilheitsgerade") durch die zwei den Kurvenabschnitt begrenzenden Kurvenpunkte bedeutet. Für ein besseres Verständnis dieser Ausführungsform wird auf DE 10 2008 059 385 A1 verwiesen, deren Inhalt hiermit zum Gegenstand der Offenbarung gemacht wird.

Eine Weiterentwicklung dieser Ausführungsform betrifft entsprechend ausgestaltete Spliceklebebänder, wobei die ungeraden Begrenzungskanten in Form einer sich entlang einer geraden Basislinie (X) erstreckenden Kurve (F) mit einer Vielzahl an Maxima (Eₘₐₓ) und Minima (Eₘᵢₙ) ausgebildet ist, wobei die Steilheitsgerade (G_{f}) zwischen einem jeweiligen Minimum (Eₘᵢₙ) und dem entlang einer Vorzugsrichtung der Basislinie (X) nächstfolgenden Maximum (Eₘₐₓ) der Kurve (F) eine geringere Steilheit aufweist als die Steilheitsgerade (Gₛ) zwischen diesem Maximum (Eₘₐₓ) und dem darauf wieder nächstfolgenden Minimum (Eₘᵢₙ). Auch für diese Weiterentwicklung wird auf die DE 10 2008 059 385 A1 verwiesen.

In einer weiteren, besonders bevorzugten Ausführungsform der Erfindung umfasst das Spliceklebeband einen zweiten Träger, wobei das erste und das zweite spaltfähige Verbindungselement den ersten Träger jeweils mit dem zweiten Träger des erfindungsgemäßen Spliceklebebandes verbinden und der erste Träger und der zweite Träger auf ihren den Verbindungselementen abgewandten Seiten jeweils eine Haftklebmassenschicht aufweisen. In einer einfachsten Ausführungsform handelt es sich dabei bei dem ersten und dem zweiten spaltfähigen Verbindungselement jeweils um eine Kaschiermasse, die zwischen dem ersten und dem zweiten Träger angeordnet ist.

Das erste und das zweite spaltfähige Verbindungselement erfindungsgemäßer Spliceklebebänder weist in einer bevorzugten Ausführungsform der Erfindung jeweils eine Schicht eines spaltfähigen Materials auf, die beidseitig mit einer Haftklebemasse beschichtet ist.

Als "spaltfähig" werden im Sinne der vorliegenden Erfindung entsprechend solche Verbindungselemente beziehungsweise Materialien bezeichnet, die parallel zu ihrer Flächenausdehnung spaltbar sind, und insbesondere solche Verbindungselemente beziehungsweise Materialien, die bezogen auf die Anforderungen in einem SpliceVerfahren auch tatsächlich spalten. "Spaltfähig" ist im Sinne der vorliegenden Erfindung ferner im Sinne von "delaminierbar" zu verstehen, wenn das Spliceklebeband einen ersten und einen zweiten Träger umfasst, die lediglich durch Kaschiermasse als "spaltfähiges" Verbindungselement verbunden sind. In diesem Fall ergibt sich die Spaltfähigkeit der Verbindungselemente entweder aus einer Spaltbarkeit innerhalb der Flächenausdehnung der Kaschiermassen selbst oder aus einer Delaminierbarkeit des ersten beziehungsweise zweiten Trägers von der Kaschiermasse, wobei diese nichtklebend verbleibt.

Für die Schicht eines spaltfähigen Materials kommen alle spaltfähigen flächigen Materialien in Frage, insbesondere leicht spaltende Papiere, Kraftpapiere, Papierverbundsysteme (beispielsweise Duplexpapiere und geleimte Papiersysteme), Folienverbundsysteme (beispielsweise geleimte Foliensysteme), polymere Verbundsysteme (beispielsweise coextrudierte Verbundsysteme) und polymere Vliesstoffe. Vorteilhaft wird für die spaltfähigen Verbindungselemente ein Material eingesetzt, welches eine deutlich geringere Spaltfestigkeit als ein Material aufweist, welches Zugkräfte aufnehmen muss. Insbesondere bevorzugt wird für ein spaltfähiges Verbindungselement ein Material verwendet, das einen deutlich geringeren Weiterreißwiderstand aufweist als ein Material oder eine Materialschicht, die die eigentlichen Zugkräfte in der Hauptebene des Klebebandes aufnimmt, um die beiden Materialbahnen miteinander während des Splicevorganges zu verbinden. Somit wird das spaltfähige Verbindungselement aufgespalten, bevor der erste beziehungsweise der erste und der zweite Träger zerstört wird. Die Schicht eines spaltfähigen Materials basiert bevorzugt auf Papier. Hierfür kommen beispielsweise insbesondere folgende Papiere oder Papierverbundsysteme in Frage:
- Geleimte hochverdichtete Papiere
- Leicht spaltbare Papiersysteme, z. B. nicht nassfeste Papiere
- Kraftpapiere (beispielsweise beidseitig glatte Kraftpapiere - insbesondere geeignet gezeigt hat sich ein Kraftpapier von 55 µm Dicke und einem Flächengewicht von 65 g/m²)
- Duplexpapiere
   (definiert zusammenlaminierte Papiere, der Spaltvorgang verläuft extrem homogen; es entstehen keine Spannungsspitzen, z. B. durch inhomogene Verdichtung.
   Diese Papiere werden zur Herstellung von Tapeten und Filtern eingesetzt.)
- Spaltfähige Systeme, bei welchen die Spaltkräfte über die Größe der Verklebungspunkte bestimmt werden; solche spaltfähigen Systeme werden beispielsweise in der DE 198 41 609 A1 beschrieben.

In einer weiteren Ausführungsform der Erfindung weist das erste und/oder das zweite spaltfähige Verbindungselement als Alternative zu der oben beschriebenen Schicht eines spaltfähigen Materials zwei mittels Kaschiermasse verbundene Schichten auf, die auf ihrer der Kaschiermasse abgewandten Seite eine erste beziehungsweise zweite Haftklebmassenschicht aufweist. Gemäß dieser Ausführungsform der vorliegenden Erfindung sind das erste und/oder das zweite spaltfähige Verbindungselement also nicht einlagig und flächig spaltbar, sondern in Form zweier flächig voneinander lösbarer (delaminierbarer) Schichten ausgestaltet. Dies können insbesondere Papier-Papier- oder Folien-Folien-Laminate oder auch ein Laminat von Papier mit Folie sein. Hierfür kommen beispielsweise insbesondere folgende Laminat- oder Verbundsysteme auf Papier- und/oder Folienbasis in Frage:
- Duplexpapiere
   (definiert zusammenlaminierte Papiere, der Spaltvorgang verläuft extrem homogen; es entstehen keine Spannungsspitzen, z. B. durch inhomogene Verdichtung.
   Diese Papiere werden zur Herstellung von Tapeten und Filtern eingesetzt.)
- Spaltfähige Systeme, bei welchen die Spaltkräfte über die Größe der Verklebungspunkte bestimmt werden; solche Systeme werden beispielsweise in der DE 198 41 609 A1 beschrieben.

Insbesondere für repulpierbare Klebebänder ist ein Laminat zweier Papiere vorteilhaft. Beispiele für derartige Papierlaminate sind
- definiert zusammengeleimte hochverdichtete Papiere (insbesondere Papiere mit einer hohen Spaltfestigkeit). Die Leimung kann beispielsweise mit Stärke, stärkehaltigen Derivaten, Tapetenkleister auf Basis von Methylcellulose (tesa® Kleister, tesa AG, Hamburg; Methylan®, Henkel KgaA, Düsseldorf) oder auch auf Basis von Polyvinylalkoholderivaten erfolgen. Beschrieben werden solche Laminat-Systeme beispielsweise in der EP 0 757 657 A1.

Das Laminat kann auch ein solches zweier Polymerschichten, einer Polymerschicht mit Papier oder einer Polymerschicht mit Folie ausgestaltet sein, wobei das Polymer insbesondere ein solches ist, das sich durch Drucktechnik, wie etwa Tiefdruck, Siebdruck oder dergleichen, aufbringen lässt. Für das Polymer kommen hier insbesondere aushärtende Polymermassen in Frage, aber auch lösemittelhaltige Massen, denen nach der Aufbringung das Lösemittel entzogen wird, wobei die Schicht entsteht, weiterhin auch Polymermassen, die im erwärmten Zustand erweichen, also hinreichende Viskosität aufweisen, um aufgebracht werden zu können, bei Anwendungstemperatur aber als hinreichend stabile Schicht vorliegen.

In einer weiteren Ausführungsform der Erfindung weist das erste und/oder das zweite spaltfähige Verbindungselement als Alternative zu der oben genannten Schicht eines spaltfähigen Materials eine Schicht auf, die mit dem ersten oder zweiten Träger mittels Kaschiermasse verbunden oder auf andere Art und Weise auflaminiert ist, so dass das Verbindungselement von dem ersten oder zweiten Träger flächig delaminierbar ist.

In einer besonders bevorzugten Ausführungsform der Erfindung ist das erste und/oder das zweite spaltfähige Verbindungselement jeweils mittels Haftklebemasse auf dem ersten und/oder zweiten Träger des Spliceklebebandes angeordnet.

Als Kaschiermasse kann z. B. eine solche verwendet werden, die neben einem Binder schwach trennwirksame silikonfreie und bei Bedarf auch elastifizierende Zusätze enthält. Dabei ist darauf zu achten, dass die getrockneten Filme auch bei höheren Temperaturen keine Haftkraft besitzen, damit die nach der Spaltung freigelegten Flächen keine Maschinenteile oder Produktionsware verschmutzen oder daran kleben bleiben. Für den Einsatz in Papiermaschinen ist es wünschenswert, dass alle Bestandteile des Spleißklebebandes das Repulpieren von Papieren nicht stören. Bei der Weiterverarbeitung herausgeschnittene Spleißzonen können dann problemlos repulpiert werden. Daher sind wasserbasierte Zusammensetzungen der Kaschiermasse, die bei der Papierherstellung übliche Hilfsstoffe enthalten, besonders vorteilhaft. Als Binder können z.B. modifizierte Stärken verwendet werden, oder Bindemittel wie sie für Nassklebebänder seit langem in Gebrauch sind. Als Trennmittel können z.B. Talkum, Stearylderivate wie Ca-Stearat oder Dispersionen von polymeren Trennmitteln, wie z.B. Dispersionen auf Basis von Copolymeren aus Stearylmethacrylat oder Stearylderivaten der Maleinsäure mit Styrol, eingesetzt werden. Als Elastifiziermittel können z.B. wasserlösliche Polyglykole dienen. Insbesondere wässrige Zubereitungen mit 10 - 90 Gew.% Bindemittel und 10 - 90 Gew.% Trennmittel sowie bis 60% Elastifiziermittel können als Kaschiermasse verwendet werden. Bevorzugt werden als Bindemittel Stärkederivate, z.B. anionische Kartoffelstärke, in Anteilen von 30 - 70 Gew.% eingesetzt. Als Trennmittel werden vorzugsweise Talkum, Ca-Stearat und/oder trennwirksame Copolymere mit Stearylgruppen in Anteilen von 30 - 80 Gew. % verwendet. Zur Elastifizierung haben sich Polypropylen- oder Polyethylenglykole vorzugsweise in Mengen zwischen 0 - 15 Gew.% als gut geeignet erwiesen. Dabei werden die höher molekularen, bei Raumtemperatur, festen Produkte vorrangig verwendet. Weitere in größeren Anteilen gut einsetzbare Elastifizierungsmittel sind Gummi Arabicum und Kunststoffe mit ähnlichem Eigenschaftsprofil. Die Kaschiermasse wird bevorzugt mit einem für wässrige Dispersionen geeigneten Auftragswerk auf einen Papierträger oder dergleichen beschichtet und in nassem Zustand mit einem zweiten Papierträger oder dergleichen eingedeckt und anschließend getrocknet. Bei Bedarf können die in der Papierherstellung üblichen Maßnahmen wie Rückbefeuchtung, Glättung und Egalisierung des erzeugten Verbunds eingesetzt werden. Die Schichtstärke der Kaschiermasse liegt nach dem Trocknen vorzugsweise in einem Bereich von 3 -20 g/qm.

Für den Fall, dass das erste und/oder das zweite spaltfähige Verbindungselement zwei mittels Kaschiermasse verbundene Schichten umfasst, beziehungsweise für den Fall, dass in einer alternativen Ausführungsform der Erfindung das erste und/oder das zweite spaltfähige Verbindungselement eine Schicht umfasst, die mit dem ersten oder zweiten Träger mittels Kaschiermasse verbunden ist, kann die Kaschiermasse jeweils in Form einer flächig dichten oder partiellen, nicht vollflächigen, d.h. nicht flächig dichten Auftragung ausgebildet werden. Hierzu wird die Kaschiermasse jeweils mittels Rasterwalzen, Siebdruck, Flexodruck auf eine der zu verbindenden Schichten beziehungsweise den Träger aufgebracht und nass mit der anderen zu verbindenden Schicht beziehungsweise dem Träger zusammenkaschiert und getrocknet. Die Geometrie des Siebes bzw. der Rasterwalze oder Flexodruckform kann dabei so gewählt werden, dass diskrete beschichtete Areale entstehen, die beim Kaschieren nicht zu einer vollen Fläche zusammengepresst werden. Die Kaschierung besteht in diesem Fall aus kleinen diskreten Punkten. Alternativ kann mit den genannten Beschichtungstechniken auch eine vollflächige Beschichtung erreicht werden. Nur müssen dann die Beschichtungsaggregate so gewählt werden, dass die beschichtete Kaschiermasse beim Kaschieren zu einem vollflächigen Film ausgebildet wird. Eine vollflächige Beschichtung kann ebenfalls im Streifenstrich mittels Drahtrakel (Mayer-bar) oder Düsenbeschichtung erfolgen.

Bei Material, das im Siebdruck hergestellt wird, gibt das Siebdesign die Schichtstärken der Kaschiermasse vor. Bevorzugt werden Siebe mit 14 bis 100 mesh und 7% - 60% Durchlass verwendet. Die Beschichtungsmenge an getrockneter Kaschiermasse wird im Bereich 2 - 20 g/qm eingestellt.

Für den Siebdruck werden höher viskose pastenartige, nicht schäumende wässrige Zubereitungen verwendet, deren Feststoffgehalt z.B. aus anionischer Kartoffelstärke besteht. Elastifizierende Zusätze wie Polypropylen- oder Polyethylenglykole und/ oder Trennmittel können in Mengen, die mit dem Hauptbestandteil verträglich sind, mit verwendet werden. Die Einstellung der Spaltkräfte, d.h. Anspaltkraft und Weiterspaltkraft, wird neben dem Anteil an Trennmittel durch Siebdesign und Feststoffkonzentration vorgegeben.

Zur Erzielung eines sauberen, nicht verschmierten Druckbildes muss der elastische Anteil im Fließverhalten der wässrigen Zubereitung gering gehalten werden, damit ein Fadenziehen vermieden wird. Dies kann z.B. durch Zusätze von Talkum oder geringen Mengen feinsteiligem Kieselgels oder anderen Verdickern erreicht werden.

Werden die Kaschiermassen mittels Rasterwalze aufgetragen, so gibt die Gravur der Rasterwalze die Schichtstärke der Kaschiermasse vor. Bevorzugt werden Rasterwalzen mit kreuzdiagonaler Gravur, insbesondere im 45° Winkel, verwendet, um die Kaschiermasse aufzutragen. Die Volumina der Gravuren liegen dabei bevorzugt im Bereich 25 - 60 cm³/m². Ebenso können Rasterwalzen mit Linienrasterungen mit 10 - 30 Linien/cm eingesetzt werden, deren Volumen bevorzugt im Bereich 30 - 90 cm³/m² liegt. Um diskrete Areale zu beschichten wird der Gleichlauf zwischen Papierträger und Rasterwalze bevorzugt.

Bei der Beschichtung mittels Rasterwalze werden fließfähige, nicht schäumende wässrige Zubereitungen verwendet, deren Feststoffgehalt z.B. aus anionischer Kartoffelstärke besteht. Elastifizierende Zusätze wie Polypropylen- oder Polyethylenglykole und/ oder Trennmittel können in Mengen, die mit dem Hauptbestandteil verträglich sind, mit verwendet werden. Die Einstellung der Spaltkräfte, d.h. Anspaltkraft und Weiterspaltkraft, wird neben dem Anteil an Trennmittel durch Gravur der Rasterwalze und Feststoffkonzentration vorgegeben.

Durch eine gezielte Mengeneinstellung der Kaschiermasse zwischen den verbundenen Schichten können innerhalb der spaltfähigen Verbindungselemente variierende Spaltkräfte eingestellt werden.

Das in Anwendungsrichtung vordere, d.h. das erste spaltfähige Verbindungselement erfindungsgemäßer Spliceklebebänder schließt in einer bevorzugten Ausführungsart nicht bündig mit dem ersten und gegebenenfalls dem zweiten Träger ab. In Anwendungsrichtung, d.h. in Rotationsrichtung des mit dem Spliceklebeband ausgerüsteten Ballens, ist dieses Verbindungselement eingerückt, d.h. etwas nach hinten versetzt. Dies bedingt den Effekt, dass im Augenblick des Spleißens die Verbindung der laufenden Bahn des abrollenden Ballens mit dem mittels erfindungsgemäßen Spliceklebeband ausgestatteten Ballen hergestellt wird und anschließend etwas zeitverzögert das Spalten der spaltfähigen Verbindungselemente einsetzt. Vorteilhafterweise beträgt der Versatz des vorderen, d.h. ersten spaltfähigen Verbindungselementes in Bezug auf die in Anwendungsrichtung vordere Kante des ersten und gegebenenfalls des zweiten Trägers des Spliceklebebandes bis zu 20 mm, bevorzugt bis zu 15 mm, zum Beispiel 1 - 3 mm, besonders bevorzugt 2 mm. Hierbei hängt der konkrete Versatz von dem Trägermaterial des Spliceklebebandes und der Bahngeschwindigkeit der zu verbindenden Flachbahnen ab. Ist der Versatz zu klein, wird in der Regel die Belastung an der in Anwendungsrichtung vorderen Kante des Spliceklebebandes sehr groß sein, da kein, beziehungsweise ein sehr geringer Schäleffekt auftritt. Wird der Versatz jedoch zu groß gewählt, kommt es zu einem Umschlagen des vorderen Bereiches der Spliceklebebänder.

Als Träger für den ersten und zweiten Träger erfindungsgemäßer Spliceklebebänder können beliebige Trägermaterialien, insbesondere Trägerpapiere beziehungsweise Folien ausgewählt werden, wobei der erste und der zweite Träger erfindungsgemäß gleich oder verschieden sein können. Sofern das erste und/oder das zweite spaltfähige Verbindungselement eine Schicht umfasst, die mit dem ersten und/oder zweiten Träger erfindungsgemäßer Spliceklebebänder mittels Kaschiermasse verbunden wird, so wird der Träger so ausgewählt, dass eine Beschichtung der Kaschiermasse problemlos möglich ist. In einer bevorzugten Ausführungsform wird Papier als Trägermaterial verwendet, das so beschaffen ist, dass die Kaschiermasse in das Papier eindringt, ohne dieses zu durchdringen. In einer besonders bevorzugten Ausführungsform sind der erste und/oder zweite Träger des Spliceklebebandes Papierträger.

Die Grammatur der einzelnen Träger liegt bevorzugt in einem Bereich von 30 bis 80 g/qm. Die Dicke liegt bevorzugt in einem Bereich von bzw. 30 bis 100 µm. Grundsätzlich gilt, dass die Trägermaterialien so dünn wie möglich ausgesucht werden sollte. Je dünner ein Spliceklebeband ist, desto weniger stört das Klebeband den Maschinendurchlauf. Liegt die Dicke der einzelnen Träger oberhalb des genannten Bereiches, kann es je nach Prozess zu Problemen beim Durchlauf durch die Maschinen kommen. Liegt die Trägerdicke jedoch unterhalb des genannten Bereiches kann es in Abhängigkeit von der Bahnspannung zu ungewollten Abrissen kommen, wenn die Zugfestigkeit des Klebebandes niedriger als die Bahnspannungen in der Verarbeitungsmaschine ist.

Für die meisten Anwendungen in der Papierindustrie hat sich als Trägermaterial maschinenglattes Papier mit einer Stärke von 30µm bis 80µm, bevorzugt 40 bis 65µm, besonders bevorzugt 50µm als geeignet herausgestellt. Beim Splicen von dickeren Materialien, z.B. von Papieren größer 200g/m² oder von Pappen, z.B. für die Getränkekartonherstellung können auch dickere Trägermaterialien eingesetzt werden.

Falls bei sehr dünnen Trägern eine Nasskaschierung nicht möglich ist, können als Kaschiermassen auch Schmelzkleber verwendet werden, vorzugsweise repulpierbare Materialien auf Basis Polyvenylpyrolydon und/oder entsprechender Copolymere oder Hydroxidpropylzellulose, die mit polaren Wachsen, Harzen und Trennwachsen wie z. B. Stearinsäure und bei Bedarf mit vorzugsweise wasserlöslichen Weichmachern abgemischt sind. Nachdem eine zu verbindende Schicht mit einem derartigen Schmelzkleber als Kaschiermasse zum Beispiel streifenförmig beschichtet wurde, wird die zweite Schicht beziehungsweise der Träger thermisch aufkaschiert. Der Schmelzkleber sollte möglichst hohe Erweichungsbereiche oberhalb 120°C haben, damit bei Kontakt mit heißen Trockenzylindern z.B. in der Papiermaschine möglichst keine Schmelzkleberpartikel auf diesen Flächen abgelagert werden. Da Schmelzkleber bei der Papierherstellung als potenzielle Störstoffe eingestuft sind, wird diese Variante der Kaschierung nicht bevorzugt eingesetzt.

Der erste Träger erfindungsgemäßer Spliceklebebänder weist auf der den spaltfähigen Verbindungselementen abgewandten Seite eine Haftklebmassenschicht auf (im Folgenden "erste Haftklebmasseschicht"). Als Haftklebmasse für die erste Haftklebmasseschicht wird vorzugsweise eine hochtackige, bevorzugt repulpierbare Klebmasse eingesetzt. Hochtackig bedeutet in diesem Zusammenhang, dass die Haftklebmasse im Endprodukt einen Rolling-Ball-Tack von weniger als 40 mm aufweist. Zur Bestimmung dieses Wertes wird dabei die jeweilige Haftklebmasse auf einem Standardpolyesterträger (Stärke 23 µm) mit einer Haftklebmassenschichtstärke von 50 g/m2 aufgetragen. Ein etwa 10 cm langer Streifen des Klebebandes wird mit der klebenden Seite nach oben horizontal auf der Prüfebene befestigt. Eine Probenkugel aus Stahl (Durchmesser: 11 mm; Masse: 5,6 g) wird mit Aceton gereinigt und für 2 h im Raumklima (Temperatur: 23 °C +/- 1 °C; relative Luftfeuchtigkeit: 50 % +/- 1%) konditioniert. Zur Messung wird die Stahlkugel durch Herabrollen von einer 65 mm hohen Rampe (Neigungswinkel: 21 °) im Schwerefeld der Erde beschleunigt. Von der Rampe wird die Stahlkugel unmittelbar auf die klebrige Oberfläche der Probe gelenkt. Der auf der Klebemasse bis zum Stillstand der Kugel zurückgelegte Weg, d.h. der Rolling-Ball-Tack, wird gemessen. Der jeweilige Messwert ergibt sich (als Längenangabe in mm) aus dem Mittelwert von fünf Einzelmessungen.

Die Schichtstärke der ersten Haftklebmasseschicht beträgt bevorzugt 30 - 60g/m².

Besonders vorteilhaft im Sinne der vorliegenden Erfindung wird als Klebmasse für die erste Haftklebmassenschicht eine Klebmasse verwendet, umfassend 25-45 Gew.-% eines Copolymer (a) sowie 55-75 Gew.-% eines Weichmachers (b), wobei das Copolymer (a) erhältlich ist durch Copolymerisation eines Gemisches umfassend 30-70 Gew.-% Acrylsäure, 15-35 Gew.-% Butylacrylat und 15-35 Gew.-% Ethylhexylacrylat, und wobei als Weichmacher (b) ein ethoxyliertes C16 bis C18 - Alkylamin verwendet wird, das vorzugsweise 15 bis 25 Ethoxy-Einheiten im Alkylrest aufweist, beispielsweise Ethomeen C/25® der Firma Akzo Nobel.

Bei der Haftklebmasse, die im Falle eines zweiten Trägers auf der den Verbindungselementen abgewandten Seite des zweiten Trägers angeordnet ist, sowie bei der Haftklebmasse, die (optional) das erste und/oder das zweite spaltfähige Verbindungselement mit dem ersten und gegebenenfalls dem zweiten Träger verbindet, beziehungsweise bei der Haftklebmasse, die im Falle eines Spliceklebebandes, umfassend lediglich einen ersten, nicht aber einen zweiten Träger auf der offenen Seite der spaltfähigen Verbindungselemente angeordnet ist (im Folgenden gemeinsam als "zweite Haftklebmasse" bezeichnet) handelt es sich vorzugsweise um eine scherfeste Haftklebmasse. Unter scherfester Haftklebmasse im Sinne der vorliegenden Erfindung wird eine Haftklebmasse verstanden, die eine statische Scherstandzeit von mehr als 400 Minuten auf Streichrohpapier und mehr als 1000 Minuten auf Tiefdruckpapier bei 23°C und 55% rel. Luftfeuchte aufweist.

Zur Messung dieser Werte werden die zu untersuchenden Klebmassen auf einen Standardträger (Polyesterfolie Dicke: 25µm) mit einem Masseauftrag von 25g/m² aufgebracht. Nach dem Trocknen und optionalem Vernetzen der Klebmasse wird ein Streifen von 13 mm Breite und mindestens 20 mm Länge herausgeschnitten und auf ein definiertes Papier (z.B. Tiefdruckpapier Neopress T 54, 54g/m², oder Streichrohpapier Mediaprint, 135g/m², der Firma Stora Enso) verklebt. Die Verklebungsfläche beträgt 13mm x 20mm. Um einen konstanten Andruck beim Verkleben zu gewährleisten, wird der Prüfling mit einer 2 kg Rolle 2 Mal langsam überrollt. Das so hergestellte Prüfmuster wird bei 23 °C und 55% rel. Luftfeuchte mit einem Gewicht von 500 g parallel zur Verklebungsebene belastet und es wird die Zeit gemessen, die der Klebestreifen auf dem Papier verbleibt.

In einer Ausführungsform der Erfindung wird als scherfeste Haftklebemasse für die zweite Haftklebemasseschicht des Spliceklebebandes eine Acrylatselbstklebemasse eingesetzt, umfassend 25-45 Gew.-% eines Copolymers (a') sowie 55-75 Gew.-% eines Weichmachers (b'), wobei als Weichmacher (b') ein ethoxyliertes C16 bis C18 - Alkylamin verwendet wird, das vorzugsweise 15 bis 25 Ethoxy-Einheiten im Alkylrest aufweist, beispielsweise Ethomeen C/25® der Firma Akzo Nobel. Das Copolymer (a') ist erhältlich in einer radikalischen Polymerisationsreaktion in polaren Lösungsmitteln mit Ethanol als Regler, optional unter Einsatz eines Aluminiumchelats als Vernetzer (0,3 bis 1,2 Gew.-%, bezogen auf die Gesamtmenge), aus einem Monomerengemisch umfassend 40-90 Gew.-% Acrylsäure sowie bis zu 60 Gew.-% Butylacrylat und optional bis zu 30 Gew.-% Ethylhexylacrylat. Ein bevorzugtes Copolymer (a') ist erhältlich aus einem Monomerengemisch umfassend 40-90 Gew.-% Acrylsäure sowie 10-60 Gew.-% Butylacrylat. Ein ebenfalls bevorzugtes Copolymer (a') ist erhältlich aus einem Gemisch umfassend 40-90 Gew.-% Acrylsäure, 15-35 Gew.-% Butylacrylat sowie 15-35 Gew.-% Ethylhexylacrylat.

Die Schichtstärke der zweiten Haftklebmassenschicht beträgt bevorzugt 15 - 30g/m².

In einer weiteren Ausführungsform der Erfindung ist die erste Haftklebemasseschicht mit einem Trennmedium (Liner), d.h. mit trennendem Trägermaterial belegt, z. B. mit beidseitig trennendem Trägermaterial wie z. B. silikonisiertem Papier. In einer weiteren Ausführungsform der Erfindung ist zusätzlich zu der ersten Haftklebemassenschicht auch die andere offene, d.h. zweite Haftklebmassenschicht mit einem trennenden Trägermaterial belegt. In einer besonderen Ausführungsform der Erfindung wird ein beidseitig trennendes Trägermaterial verwendet. Hierbei ist es ausreichend, lediglich ein solches Trägermaterial, d.h. lediglich einen einzigen Liner zum Beispiel bevorzugt auf die erste Haftklebemassenschicht einzuschießen und das derart belegte Spliceklebeband zu Rollen zu wickeln.

In einer besonderen Ausführungsform der Erfindung weist das Trennmedium einen Schlitz auf, so dass das Trennmedium in zwei Schritten abgezogen werden kann, wobei zwei definierte Bereiche der abgedeckten ersten Haftklebemassenschicht entsprechender erfindungsgemäßer Spliceklebebänder freigelegt werden. In einer besonders bevorzugten Ausführungsform der Erfindung befinden sich sowohl das erste als auch das zweite spaltfähige Verbindungselement auf derselben Seite des Schlitzes des Trennmediums.

Das Spliceklebeband kann erfindungsgemäß in verschiedenen Ausführungsformen bereitgestellt werden. Die Breite des Spliceklebebandes ist keinen besonderen Einschränkungen unterworfen, liegt jedoch bevorzugt in einem Bereich von 20 mm bis 100 mm, besonders bevorzugt in einem Bereich von 30 mm bis 80 mm, besonders bevorzugt von 38mm - 75mm. Diese Breite ist für die Verwendung für den fliegenden Rollenwechsel besonders geeignet. Bei sehr schnell laufenden Maschinen (Streichmaschinen Papierherstellung) oder schwierig zu verklebenden bahnförmigen Materialien, wie z.B. unpolaren Folien wie PE oder PP, werden breitere Spliceklebebänder benötigt. Für langsamere Maschinen bzw. einfach zu verklebende Untergründe, wie es z.B. für die meisten Papiersorten zutrifft, können die Breiten des Spliceklebebandes reduziert werden.

Im Folgenden wird die Erfindung anhand eines Ausführungsbeispiels näher beschrieben, ohne die Erfindung hierdurch einschränken zu wollen.

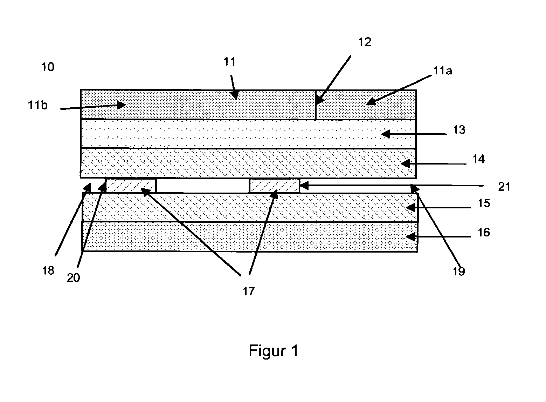

Figur 1 zeigt eine seitliche, schematische Ansicht eines beispielhaften, erfindungsgemäßen Spliceklebebandes.

Im einzelnen zeigt Figur 1 ein Spliceklebeband (10) mit zwei Trägern (14, 15), die mittels zweier Verbindungselemente (17) verbunden sind. Auf der Oberseite des ersten Trägers 14 ist eine erste Haftklebemasseschicht aufgebracht (13). Da diese in der späteren Anwendung den Kontakt zwischen ablaufender Bahn des abrollenden Ballens und neuer Materialbahn des gewickelten Ballens herstellt, ist diese Klebmasse vorteilhafterweise hochtackig eingestellt. Auf der Unterseite des zweiten Trägers ist eine zweite Haftklebemasseschicht (16) auf den Papierträger (15) aufgebracht. Die hierfür verwendete Haftklebmasse weist eine hohe Scherfestigkeit auf.

Die Klebmasseschicht 13 ist abgedeckt mit einem Trennmedium (11). Im vorliegenden Ausführungsbeispiel weist das Trennmedium 11 einen Schlitz (12) auf, sodass durch separates Abziehen der beiden Trennmedien (11a, 11b) zwei definierte Bereiche auf der Klebmasse 13 entstehen. In der Anwendung kann zunächst der kleinere Bereich (11a) abgezogen werden, und auf dem darunter freiliegenden Teilbereich der Klebmasseschicht 13 wird der Endbereich der obersten Lage eines gewickelten Ballens verklebt. Nach Verkleben der zweiten Haftklebemasseschicht (16) auf den Übergang von oberster zu zweitoberster Lage des Ballens, d.h. im Übergangsbereich von oberster zu zweitoberster Lage des Ballens, wird dann der größere Bereich (11 b) abgezogen, sodass die größere Fläche der Haftklebemasseschicht 13 für den fliegenden Rollenwechsel zur Verfügung steht.

Die Verbindungselemente (17) sind von den Kanten zur Mitte des Splicebandes hin versetzt (18, 19). Der in Anwendungsrichtung vordere Versatz ist notwendig, um den Anklebezeitpunkt der neuen Bahn von dem zeitlichen Beginn des Spaltvorganges des ersten Kaschiermassestreifens zu trennen. Das Maß des Versatzes ist abhängig von der Anwendungsgeschwindigkeit und den zu splicenden Materialien. Für einen Einsatz bei hohen Geschwindigkeiten (bis 1800m/min) beträgt der Versatz vorzugsweise 1 mm bis 3 mm, bevorzugt 2mm. Für den fliegenden Rollenwechsel an Kalandern und Umrollern (bei Geschwindigkeiten von 50m/min - 100m/min) kann ein Versatz von beispielsweise bis zu 15mm gewählt werden. Der hintere Versatz (19) sollte grundsätzlich so klein wie möglich gewählt werden, da der hintere Kaschiermassestreifen auch dazu dient, eine sichere und spielfreie Verklebung des Splicebandes mit der obersten Lage des gewickelten Ballens zu gewährleisten. Je dichter der Streifen am Ende des Klebebandes positioniert werden kann, desto sicherer kann die Verklebung gestaltet werden. Allerdings sollte der Streifen nicht unter den Trägern 14, 15 hervorstehen, sodass sich der Versatz 19 ggf. aus der Herstellgenauigkeit der Herstellanlagen ergibt. Die in Anwendungsrichtung vordere Begrenzungskante (20) des in Anwendungsrichtung vorderen Verbindungselements ist ungerade ausgestaltet, während die in Anwendungsrichtung hintere Begrenzungskante des in Anwendungsrichtung hinteren Verbindungselementes des in Figur 1 gezeigten Spliceklebebandes eine gerade Begrenzungskante (21) ist.

Erfindungsgemäß kann ein Spliceklebeband bereit gestellt werden, das einerseits ein ungewolltes Anspalten in der Vorbereitung gewickelter Ballen bahnförmigen Materials für ein entsprechendes Spliceverfahren unterdrückt und andererseits eine Faltenbildung im Bereich spaltfähiger Verbindungselemente innerhalb eines Spliceklebebandes vermeidet, was ebenfalls die Gefahr eines ungewollten Anspaltens - vor allem während der Beschleunigungsphase vorbereiteter Rollen - minimiert. Gleichfalls gewährleistet die Verwendung erfindungsgemäßer Spliceklebebänder in Verfahren des fliegenden Rollenwechsels eine zuverlässige Vermeidung von Falten im Bereich des radial äußeren Endes der neuen Rolle, so dass auch hierdurch eine gesteigerte Prozessstabilität gewährleistet wird.

## Patentansprüche

1. Spliceklebeband umfassend einen ersten Träger und
ein erstes spaltfähiges Verbindungselement mit einer linken (*l*) und einer rechten Begrenzungskante (r), wobei zumindest eine dieser beiden Kanten (l, r) ungerade ist und Vorsprünge (V) aufweist, die an ihren am weitesten vorspringenden Stellen (v) gerundet ausgeführt sind, sowie
ein zweites spaltfähiges Verbindungselement mit einer linken (L) und einer rechten Begrenzungskante (R), wobei zumindest eine dieser beiden Kanten *(L, R)* gerade ist, wobei das erste und das zweite spaltfähige Verbindungselement auf dem Träger nebeneinander angeordnet sind.

2. Spliceklebeband gemäß Anspruch 1, wobei das erste und das zweite spaltfähige Verbindungselement derart auf dem ersten Träger nebeneinander angeordnet sind, dass sie selbst nicht miteinander in unmittelbarem Kontakt stehen.

3. Spliceklebeband gemäß Anspruch 1 oder 2, wobei das erste und das zweite spaltfähige Verbindungselement derart auf dem ersten Träger nebeneinander angeordnet sind, dass eine ungerade Begrenzungskante (*l*, *r*) des ersten spaltfähigen Verbindungselementes und eine gerade Begrenzungskante (*L*, *R*) des zweiten spaltfähigen Verbindungselementes von einander abgewandt sind.

4. Spliceklebeband gemäß einem der vorangehenden Ansprüche, wobei das erste und das zweite spaltfähige Verbindungselement einen Abstand von 3 - 50 mm zueinander aufweisen.

5. Spliceklebeband gemäß einem der vorangehenden Ansprüche, wobei das erste spaltfähige Verbindungselement in Form einer Vielzahl einzelner Flächenelemente vorliegt.

6. Spliceklebeband gemäß einem der vorangehenden Ansprüche, wobei das Spliceklebeband einen zweiten Träger aufweist und das erste und das zweite spaltfähige Verbindungselement den ersten Träger jeweils mit dem zweiten Träger verbindet, wobei der erste Träger und der zweite Träger auf ihren den Verbindungselementen abgewandten Seiten jeweils eine Haftklebmassenschicht aufweisen.

7. Spliceklebeband gemäß einem der vorangehenden Ansprüche, wobei das erste und/oder das zweite spaltfähige Verbindungselement jeweils eine Schicht eines spaltfähigen Materials aufweist, die beidseitig mit einer Haftklebmasse beschichtet ist.

8. Spliceklebeband gemäß einem der vorangehenden Ansprüche, wobei das erste und/oder das zweite spaltfähige Verbindungselement zwei mittels Kaschiermasse verbundene Schichten umfasst, die auf ihrer der Kaschiermasse abgewandten Seite eine erste bzw. zweite Haftklebmassenschicht aufweisen.

9. Spliceklebeband gemäß einem der vorangehenden Ansprüche, wobei das erste und/oder das zweite spaltfähige Verbindungselement eine Schicht umfasst, die mit dem ersten oder zweiten Träger mittels Kaschiermasse verbunden ist.

10. Spliceklebeband gemäß einem der Ansprüche 1 - 8, wobei das erste und/oder das zweite spaltfähige Verbindungselement jeweils mittels Haftklebmasse auf dem ersten und/oder zweiten Träger angeordnet ist.

11. Gewickelte Rolle bahnförmigen Materials umfassend ein Spliceklebeband gemäß einem der Ansprüche 1 - 10.

12. Verwendung eines Spliceklebebandes gemäß einem der Ansprüche 1 - 10 während eines fliegenden Rollenwechsels von auf Rollen gewickeltem Flachbahnmaterial zum Verbinden zweier Flachbahnen.

## Claims

1. Adhesive splicing tape comprising a first carrier and
a first splittable connecting element having a left-hand (*l*) and a right-hand (*r*) bounding edge, at least one of these two edges (*l*, *r*) being nonrectilinear and having projections (V) which are rounded at their furthest projecting points (v), and also
a second splittable connecting element having a left-hand (*L*) and a right-hand (*R*) bounding edge, at least one of these two edges (*L, R*) being rectilinear, and the first and second splittable connecting elements being disposed adjacent one another on the carrier.

2. Adhesive splicing tape according to Claim 1, the first and second splittable connecting elements being disposed adjacent one another on the first carrier in such a way that they are not themselves in direct contact with one another.

3. Adhesive splicing tape according to Claim 1 or 2, the first and second splittable connecting elements being disposed adjacent one another on the first carrier in such a way that a nonrectilinear bounding edge (*l*, *r*) of the first splittable connecting element and a rectilinear bounding edge (*L, R*) of the second splittable connecting element are facing away from one another.

4. Adhesive splicing tape according to any of the preceding claims, the first and second splittable connecting elements having a distance of 3-50 mm to one another.

5. Adhesive splicing tape according to any of the preceding claims, the first splittable connecting element being present in the form of a multiplicity of individual sheetlike elements.

6. Adhesive splicing tape according to any of the preceding claims, the adhesive splicing tape having a second carrier, and the first and second splittable connecting elements each joining the first carrier to the second carrier, the first carrier and the second carrier each having a layer of pressure-sensitive adhesive on their sides facing away from the connecting elements.

7. Adhesive splicing tape according to any of the preceding claims, the first and/or second splittable connecting elements each having a layer of a splittable material, said layer being coated on both sides with a pressure-sensitive adhesive.

8. Adhesive splicing tape according to any of the preceding claims, the first and/or the second splittable connecting element comprising two layers which are joined by means of laminating composition and which, on their side facing away from the laminating composition, have a first or second layer, respectively, of pressure-sensitive adhesive.

9. Adhesive splicing tape according to any of the preceding claims, the first and/or the second splittable connecting element comprising a layer which is joined to the first or second carrier by means of laminating composition.

10. Adhesive splicing tape according to any of Claims 1-8, the first and/or second splittable connecting elements each being disposed by means of pressure-sensitive adhesive on the first and/or second carrier, respectively.

11. Wound roll of material in web form, comprising an adhesive splicing tape according to any of Claims 1-10.

12. Use of an adhesive splicing tape according to any of Claims 1-10 during a flying roll change of flat web material wound on rolls, for joining two flat webs.

## Revendications

1. Bande adhésive de collure comprenant un premier support et
un premier élément de liaison séparable avec une arête de limitation gauche (*l*) et droite (*r*), dans lequel au moins une de ces deux arêtes (*l*, *r*) n'est pas rectiligne et présente des saillies (V), qui sont de forme arrondie à leurs points les plus saillants (v), ainsi que
un deuxième élément de liaison séparable avec une arête de limitation gauche (*L*) et droite (*R*), dans lequel au moins une de ces deux arêtes *(L, R)* est rectiligne, dans laquelle le premier et le deuxième éléments de liaison séparables sont disposés l'un à côté de l'autre sur le support.

2. Bande adhésive de collure selon la revendication 1, dans laquelle le premier et le deuxième éléments de liaison séparables sont disposés l'un à côté de l'autre sur le premier support, de telle manière qu'ils ne soient pas eux-mêmes en contact direct l'un avec l'autre.

3. Bande adhésive de collure selon la revendication 1 ou 2, dans laquelle le premier et le deuxième éléments de liaison séparables sont disposés l'un à côté de l'autre sur le premier support, de telle manière qu'une arête de limitation non rectiligne (*l*, *r*) du premier élément de liaison séparable et une arête de limitation rectiligne (*L, R*) du deuxième élément de liaison séparable soient situées à l'opposé l'une de l'autre.

4. Bande adhésive de collure selon l'une quelconque des revendications précédentes, dans laquelle le premier et le deuxième éléments de liaison séparables présentent une distance de 3 à 50 mm l'un de l'autre.

5. Bande adhésive de collure selon l'une quelconque des revendications précédentes, dans laquelle le premier élément de liaison séparable se présente sous la forme d'une pluralité d'éléments plats individuels.

6. Bande adhésive de collure selon l'une quelconque des revendications précédentes, dans laquelle la bande adhésive de collure comprend un deuxième support et le premier et le deuxième éléments de liaison séparables relient le premier support respectivement au deuxième support, dans laquelle le premier support et le deuxième support présentent une couche de masse adhésive respectivement sur leurs côtés situés à l'opposé des éléments de liaison.

7. Bande adhésive de collure selon l'une quelconque des revendications précédentes, dans laquelle le premier et/ou le deuxième élément(s) de liaison séparable(s) présente(nt) respectivement une couche de matériau séparable, qui est revêtue d'une masse adhésive sur les deux faces.

8. Bande adhésive de collure selon l'une quelconque des revendications précédentes, dans laquelle le premier et/ou le deuxième élément(s) de liaison séparable(s) comprend/comprennent deux couches assemblées au moyen d'une masse de contre-collage, qui présentent une première ou une deuxième couche de masse adhésive sur leur côté situé à l'opposé de la masse de contre-collage.

9. Bande adhésive de collure selon l'une quelconque des revendications précédentes, dans laquelle le premier et/ou le deuxième élément(s) de liaison séparable(s) comprend/comprennent une couche, qui est assemblée au premier ou au deuxième support au moyen de masse de contre-collage.

10. Bande adhésive de collure selon l'une quelconque des revendications 1 à 8, dans laquelle le premier et/ou le deuxième élément(s) de liaison séparable(s) est/sont disposé(s) sur le premier et/ou le deuxième support respectivement au moyen de masse adhésive.

11. Bobine enroulée d'un matériau en bande comprenant une bande adhésive de collure selon l'une quelconque des revendications 1 à 10.

12. Utilisation d'une bande adhésive de collure selon l'une quelconque des revendications 1 à 10, pendant un changement de bobine volant de matériau en bande enroulé en bobines pour la liaison de deux bandes plates.
